# EUROPÄISCHE PATENTSCHRIFT

(11) **EP 3 425 248 B1**
(45) Veröffentlichungstag und Bekanntmachung des Hinweises auf die Patenterteilung: **11.11.2020**
(21) Anmeldenummer: 18181940.0
(22) Anmeldetag: 05.07.2018
(51) Int. Cl.: F16K 31/126

(54) **STELLANTRIEB FÜR PROZESSVENTILE**
ACTUATOR FOR PROCESS VALVES
SERVOMOTEUR POUR SOUPAPES DE PROCESSUS

(30) Priorität: 07.07.2017 DE 202017104079 U
(43) Veröffentlichungstag der Anmeldung: 09.01.2019
(73) Patentinhaber: Samson AG, 60314 Frankfurt (DE)
(72) Erfinder: Koinke, Janusz, 63179 Obertshausen (DE)
(74) Vertreter: Puschmann Borchert Kaiser Klettner Patentanwälte Partnerschaft mbB

(56) Entgegenhaltungen:
- EP-A1- 0 522 285
- EP-A1- 3 112 733
- DE-A1- 4 428 990

## Beschreibung

Die Erfindung betrifft einen Stellantrieb für Prozessventile, gemäß der im Oberbegriff des Anspruches 1 angegebenen Art.

DE 44 28 990 A1 zeigt einen pneumatischen Stellantrieb für Stellglieder mit einem Antriebsgehäuse und einem darin beweglichen Antriebsorgan. An dem Antriebsorgan ist ein aus dem Antriebsgehäuse austretendes, mit dem Antriebsorgan bewegliches Antriebselement für die Betätigung des Stellgliedes befestigt. Das Antriebsorgan teilt das Antriebsgehäuse in eine Druckkammer und in eine mit einer Belüftungsöffnung versehene Rückstellkammer mit einem das Antriebsorgan beaufschlagenden Rückstellglied auf. Zudem ist ein Befestigungsanschluss für einen Stellungsregler vorgesehen, von dem ein Steuerluftzuführkanal sowie ein Abluftkanal ausgehen, der in einen Übergaberaum mündet. Das Antriebsgehäuse ist in der Weise umgekehrt montierbar, dass in einer ersten Montagestellung die Druckkammer und in einer zweiten Montagestellung die Rückstellkammer dem Befestigungsanschluss benachbart sind. Ferner geht durch das Antriebselement ein Luftführungskanal, der einerends eine Öffnung zu der dem Befestigungsanschluss abgewandten Seite des Antriebsorgans in die dortige Kammer und anderenends eine zum Übergaberaum gehende Öffnung hat. Des Weiteren ist in der ersten Montagestellung der Luftführungskanal zum Übergaberaum hin offen und der Steuerluftzuführkanal mündet direkt in die Druckkammer. Schließlich hat in der zweiten Montagestellung die Belüftungsöffnung eine Verbindung zu dem Übergaberaum und zu einer Abluftöffnung des Stellungsreglers. An dem Antriebselement ist ein Kolbenelement befestigt, das den Übergaberaum über eine Gleitringdichtung abschließt. Bei diesem Stellantrieb ist der aufwendige strukturelle Aufbau nachteilig und die Umrüstung ist entsprechend umständlich.

Weiterer Stand der Technik zu Stellventilen, bei denen das Antriebsgehäuse in der Weise umgekehrt montierbar ist, dass in einer ersten Montagestellung die Druckkammer und in einer zweiten Montagestellung die Rückstellkammer dem Befestigungsanschluss benachbart sind, ist in den Druckschriften DE 93 00 685 U1, EP 0 522 285 A1, DE 36 37 068 A1 und DE 10 2010 025 635 A1 offenbart.

Der Erfindung liegt daher die Aufgabe zugrunde, einen Stellantrieb mit integriertem Wegemesssystem mit einem kompakten und vereinfachten Aufbau bereit zu stellen, wobei der Stellantrieb so montiert werden kann, dass die Sicherheitsstellung des Ventils entweder eine drucklos offene Ventilstellung oder eine drucklos geschlossene Ventilstellung ist, und bei dem der Austausch der Sicherheitsstellung des Ventils mit wenigen Handgriffen möglich wird.

Dazu ist der erfindungsgemäße Stellantrieb derart ausgestaltet, dass an dem Stellantrieb ein Wegemesssystem angeordnet ist, das einen Anschluss aufweist, der an jedem der Kupplungsteile der Kupplungseinrichtung durch einseitige Montage anzuschließen ist, wobei die Kupplungsteile zu den korrespondierenden Anschlüssen zum wahlweisen Festlegen des Ventilschaftes oder des Wegemesssystems an der Kupplungseinrichtung analog ausgebildet sind.

Bei diesem Aufbau kann der Ventilschaft unmittelbar über das Anschlussmittel mit dem Kupplungsteil verbunden werden, was eine kompaktere Bauform und eine einfache und schnelle Montage gewährleistet.

Das Wegmesssystem, das den zur Kupplungseinrichtung korrespondierenden Anschluss aufweist und mit beiden Kupplungsteilen der Kupplungseinrichtung verbindbar ist, kann somit wahlweise mit dem einen oder dem anderen Kupplungsteil verbunden werden. Auf diese Weise kann der nicht durch den Ventilschaft genutzte Kupplungsteil von dem Wegmesssystem genutzt werden, Dies hat den Vorteil, dass das Wegmesssystem auf einfache Weise in den Antrieb integriert werden kann. Dies kann abhängig von der gewünschten drucklosen Stellung immer am anderen Anschluss der Kupplungseinrichtung erfolgen und durch die einseitige Montagemöglichkeit auch auf einfache Weise umgekehrt werden.

Insbesondere durch eine solche Anordnung der Kupplungseinrichtung in dem Stellantrieb selbst kann eine kompakte pneumatische Ventileinheit mit einem verkürzten Joch geschaffen werden, indem auch das Wegemesssystem direkt an dem Stellantrieb integriert ist. Die Ankopplung des Ventilschaftes erfolgt direkt im Stellantrieb an das Kupplungssystem, wobei eine Kupplung zwischen dem Stellantrieb und dem Ventilschaft entfällt, sodass das Joch des Prozessventils kürzer als im Stand der Technik gehalten werden kann, was ebenfalls zur Kompaktheit der Anordnung beiträgt,

Nach einer vorteilhaften Ausgestaltung der Erfindung ist ein bewegter Teil des Wegemesssystems mit einem zum Kupplungsteil korrespondierenden Anschluss versehen.

Ferner kann die Kupplungseinrichtung konzentrisch zu Befestigungsflanschen angeordnet sein, die einen Durchgang durch die Gehäuseteile zur Membran bereitstellen und an denen das Gehäuse des Stellantriebs gelagert ist. Da die Kupplungsanbindungen konzentrisch zu den gegenüberliegenden Befestigungsflanschen ausgebildet sind, wird die Umrüstung des Prozessventils von einem drucklos offenen in ein drucklos geschlossenes Ventil problemlos möglich.

Nach einer weiteren vorteilhaften Ausgestaltung, sind die gegenüberliegenden Befestigungsflansche so konfiguriert, dass entweder das Wegemesssystem oder ein Joch des Prozessventils zu befestigen ist, was die erwähnte Umrüstung ebenfalls vereinfacht.

Vorzugsweise sind das Membran-Arbeitsorgan sowie ein Membranteller des Stellantriebs zwischen den Kupplungsteilen der Kupplungseinrichtung fixiert, was zu einer sicheren zentralen Anbindung des Ventilschaftes an das Membran-Arbeitsorgan führt.

Gemäß einer vorteilhaften Weiterbildung der Erfindung umfasst das erste Kupplungsteil der Kupplungseinrichtung eine erste Buchse, die auf der einen Seite der Membran liegt und mit einem Innengewinde versehen ist, das auf der der Membran zugewandten Seite eingebracht ist, und dass das zweite Kupplungsteil der Kupplungseinrichtung eine zweite Buchse umfasst, die durch ein Loch in der Membran mit einem Gewindezapfen in das Innengewinde des ersten Kupplungsteils einzuschrauben ist, wobei die beiden Seiten der Membran insbesondere mittels eines Dichtrings fluidisch getrennt sind.

Die Kupplungsteile können an dem der Membran abgewandten Ende ein Innengewinde zum Anschrauben des Ventilschafts bzw. des Wegemesssystems aufweisen.

Alternativ kann eine durchgehende Buchse in den Membranteller eingebracht sein, wobei die im Übergang des Membrantellers erforderliche Gasdichtigkeit beispielsweise durch eine durch Einschrauben des Anschlussteils der Ventilstange komprimierte Dichtung gewährleistet wird.

Bei dem erfindungsgemäßen Stellantrieb ist vorzugsweise ein Sensorgehäuse des Wegemesssystems an dem Befestigungsflansch auf der dem Joch abgewandten Außenseite des Gehäuses des Stellantriebs angeordnet, während in weiterer bevorzugter Ausgestaltung der Ventilschaft an dem Befestigungsflansch in der dem Joch zugewandten Innenseite des Gehäuses geführt ist, wobei die Befestigungsflansche austauschbar sind. Der Ventilschaft ist dabei gegenüber dem Gehäuse abgedichtet.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Schnittdarstellung eines drucklos offenen Prozessventils;
- Fig. 2: eine vergrößerte Schnittdarstellung des drucklos offenen Prozessventils nach Fig. 1;
- Fig. 3: eine Schnittdarstellung eines drucklos geschlossenen Prozessventils, und
- Fig. 4: eine vergrößerte Schnittdarstellung des drucklos geschlossenen Prozessventils nach Fig. 3.

Die Figuren zeigen pneumatisch/fluidisch einfach wirkende Prozessventile 2, insbesondere Stellantriebe 4, für derartige Prozessventile 2.

Die in den Figuren gezeigten Prozessventile 2 umfassen einen Stellantrieb 4 und ein über ein Joch 6 mit dem Stellantrieb 4 verbundenes Ventilgehäuse 8 mit einem Einlass 10 und einem Auslass 12 und einer Ventilöffnung 14, die durch einen Ventilkörper 16 zu verschließen oder zu öffnen ist, der durch einen mit dem Ventilkörper 16 und dem Stellantrieb 4 verbundenen Ventilschaft 18 betätigt wird. Der Ventilschaft 18 ist dazu direkt mit einem Membran-Arbeitsorgan 20 des Stellantriebs 4 verbunden.

Der in den Figuren gezeigte Stellantrieb 4 umfasst ein Gehäuse 22 aus zwei Gehäusehälften 24, 26. Das zum Innern des Gehäuses 22 hin abgedichtete, hubbewegliche Membran-Arbeitsorgan 20 bildet einerseits mit dem Gehäuse 22 eine mit Druck beaufschlagbare Arbeitskammer 28 und einen Raum 30 für mindestens eine Rückstellfeder 32, die einer Druckbeaufschlagung des Membran-Arbeitsorgans 20 entgegenwirkt. Das Arbeitsorgan 20 umfasst eine Membran 34 und einen Membranteller 36, auf dem die Rückstellfeder 32 abgestützt ist.

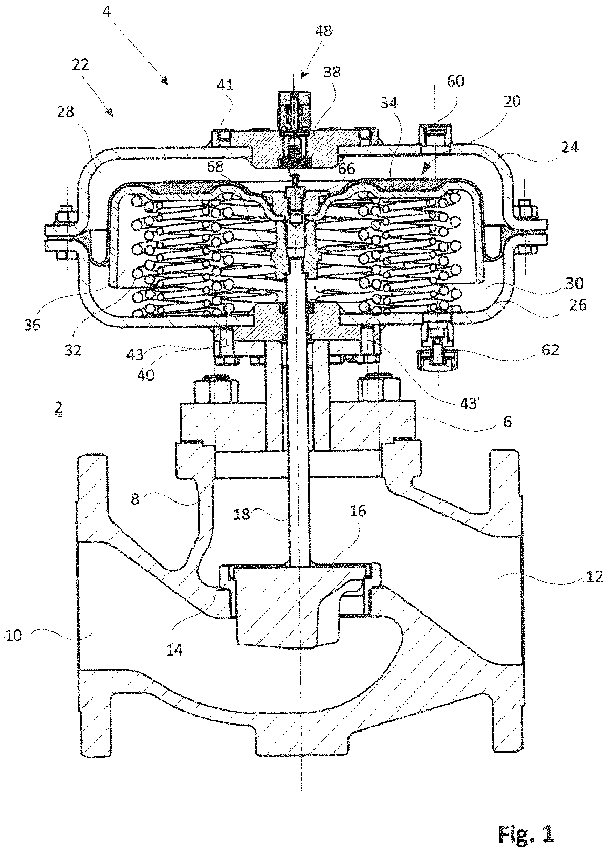

An den Gehäusehälften 24, 26 des Gehäuses 22 sind einander gegenüberliegende, mittig an den Gehäusehälften 24, 25 angeordnete Befestigungsflansche 38, 40 durch Schweißverbindungen 42 bei dem Befestigungsflansch 38 und durch Schweißverbindungen 44 bei dem Befestigungsflansch 40 befestigt. An dem Befestigungsflansch 38 sind Blindstopfen 41,41' angeordnet, wobei die entsprechenden Bohrungen keine Funktion haben, wenn der Befestigungsflansch 38 auf der Außenseite des Stellantriebs 4 liegt, wie in Fig. 1 gezeigt ist. Der Befestigungsflansch 40 ist über Bolzen 43, 43' an dem Joch 6 befestigt, wobei die Bolzen 43, 43' in Bohrungen in den Befestigungsflansch 40 eingreifen, wie in Fig. 1 gezeigt ist.

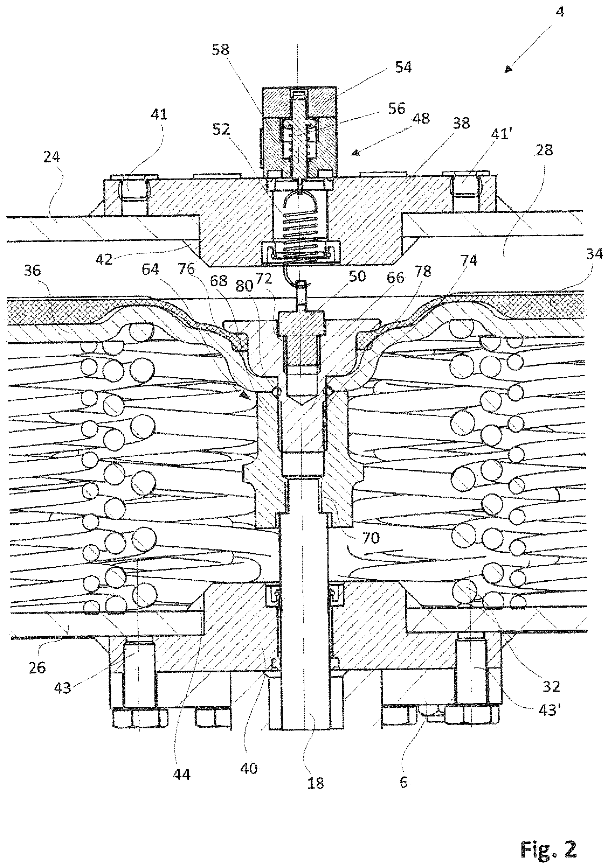

An dem Stellantrieb 4 ist ferner ein Wegemesssystem 48 angeordnet, das nach Fig. 2 aus einem mit dem Membran-Arbeitsorgan 20 verbundenen, bewegten Teil 50, einer mit dem bewegten Teil 50 verbundenen Feder 52, einem mit der Feder 52 verbundenen, längs verschieblich in einem Sensorgehäuse 54 gelagerten, entgegen der Feder 52 vorgespannten Kern 56 und einer mit dem Kern 56 zusammenwirkenden Hall-Sonde 58 besteht. Das Wegemesssystem 48 kann auch ein induktives oder kapazitives Messsystem oder dergleichen sein. Mit diesem Wegemesssystem 48 kann eine Bewegung des Arbeitsorgans 20 und damit die Bewegung des Ventilkörpers 16 gemessen werden. Das Sensorgehäuse 54 des Wegemesssystems 48 ist nach den Fig. 1 und 2 an dem Befestigungsflansch 38 auf der dem Joch 6 abgewandten Außenseite des Ventilgehäuses 8 angeordnet.

Gemäß den Fig. 1 und 2 wird im drucklosen Zustand das Membran-Arbeitsorgan 20 mittels der Federvorspannung der Rückstellfeder 32 in eine Position gebracht, die die drucklos offene Position des Prozessventils 2 ist. Dazu wird die gemäß Fig. 1 oben in dem Stellantrieb 4 liegende Arbeitskammer 28 über einen Anschlussstutzen 60 entlüftet und der gemäß Fig. 1 unten in dem Stellantrieb 4 liegende Raum 30 für die Rückstellfeder 32 wird über einen Anschlussstutzen 62 drucklos gehalten.

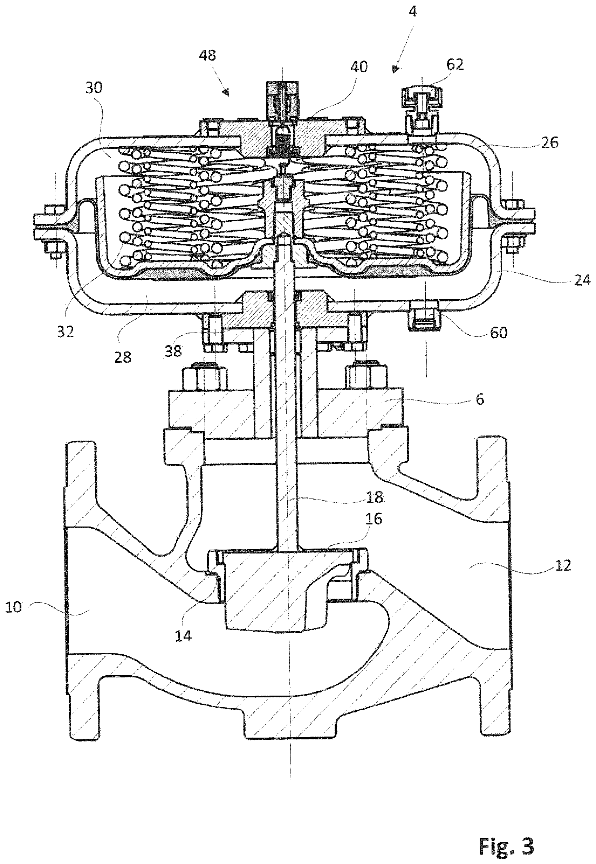

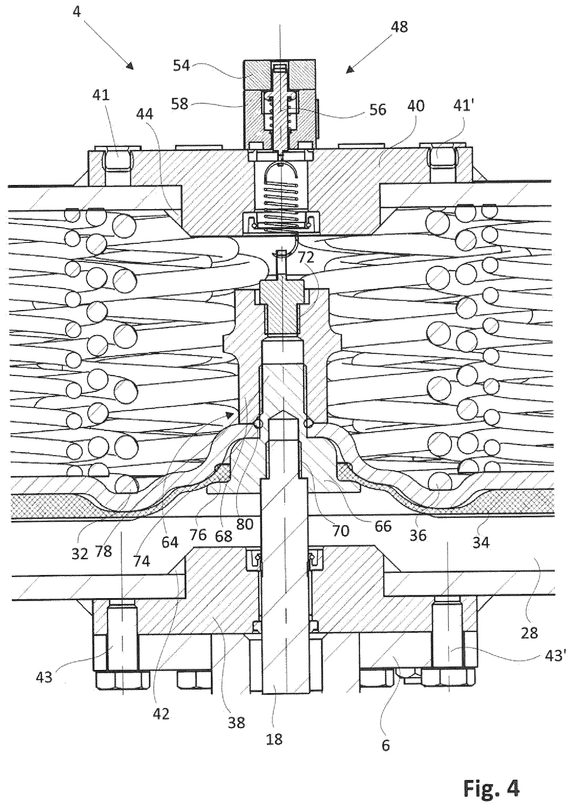

Gemäß den Fig. 3 und 4 wird im drucklosen Zustand das Membran-Arbeitsorgan 20 mittels der Federvorspannung der Rückstellfeder 32 in die drucklos geschlossene Position des Prozessventils 2 gebracht. Dazu wird die gemäß Fig. 3 in dem Stellantrieb 4 unten liegende Arbeitskammer 28 über den Anschlussstutzen 60 unter Druck gesetzt und der gemäß Fig. 3 in dem Stellantrieb 4 unten liegende Raum 30 für die Rückstellfeder 32 wird über den Anschlussstutzen 62 drucklos gehalten bzw. entlüftet. Zur Ankupplung des Ventilschafts 18 und des Wegemesssystems 48 an den Stellantrieb 4 ist eine Kupplungseinrichtung 64 mit Kupplungsteilen 66, 68 vorgesehen, die mit zueinander korrespondierenden Anschlüssen 70, 72 zur Verbindung der Kupplungseinrichtung 64 einerseits mit dem Ventilschaft 18 und andererseits mit dem bewegten Teil 50 des Wegemesssystems 48 versehen sind, wobei wahlweise entweder der Ventilschaft 18 oder das Wegemesssystem 48 über je einen Anschluss 70, 72 an der Kupplungseinrichtung 64 anzuschließen ist. Die Membrane 34 des Membran-Arbeitsorgans 20 und der Membranteller 36 des Membran-Arbeitsorgans 20 sind zwischen den Kupplungsteilen 66, 68 der Kupplungseinrichtung 64 fixiert.

Bei dem Stellantrieb 4 nach den Fig. 2 und 4 umfasst das erste Kupplungsteil 68 der Kupplungseinrichtung 64 eine erste Buchse, die auf der einen Seite der Membran 34 liegt und mit einem Innengewinde 74 versehen ist, das auf der der Membran 34 zugewandten Seite eingebracht ist. Das zweite Kupplungsteil 66 der Kupplungseinrichtung 64 umfasst eine zweite Buchse, die durch ein Loch 76 in der Membran 34 mit einem Gewindezapfen 78 in das Innengewinde 74 des ersten Kupplungsteils 68 einzuschrauben ist, wobei die beiden Seiten der Membran 34 insbesondere mittels eines Dichtrings 80 gegenüber der Membran 34 fluidisch getrennt sind.

Gemäß den Fig. 1 und 2 ist der bewegte Teil 50 des Wegemesssystems 48 mit dem in der Arbeitskammer 28 angeordneten Kupplungsteil 66 verschraubt und der Ventilschaft 18 ist mit dem in dem Raum 30 für die Rückstellfeder 32 angeordneten Kupplungsteil 68 verschraubt. Gemäß den Fig. 3 und 4 ist der bewegte Teil 50 des Wegemesssystems 48 mit dem in dem Raum 30 für die Rückstellfeder 32 angeordneten Kupplungsteil 68 verschraubt und der Ventilschaft 18 ist mit dem in der Arbeitskammer 28 angeordneten Kupplungsteil 66 verschraubt.

Die Anschlüsse 70, 72 zum Anschluss an die Kupplungseinrichtung 64 zum wahlweisen Festlegen des Ventilschafts 8 oder des Wegemesssystems 48 sind symmetrisch zu den einander gegenüberliegenden Befestigungsflanschen 38, 40 angeordnet, die an den Gehäusehälften 24, 26 des Gehäuses 22 durch die Schweißverbindungen 42 bzw. 44 befestigt sind. Die gegenüberliegenden Befestigungsflansche 38, 40 sind so konfiguriert, dass entweder das Wegemesssystem 48 oder das Joch 6 des Prozessventils 2 zu befestigen ist.

Bei den beschriebenen Prozessventilen 2 sind für die Umrüstung der Sicherheitsstellung des einfach wirkenden Stellantriebs 4 von einer drucklos offenen Stellung in eine drucklos geschlossene Stellung ausgehend von der Stellung von Fig. 1 folgende Schritte erforderlich: zunächst wird das Wegemesssystem 48 von dem Befestigungsflansch 38 entfernt. Danach wird der bewegte Teil 50 des Wegemesssystems 48 aus dem Kupplungsteil 66 herausgeschraubt. Als nächstes wird der Befestigungsflansch 40, in dem der Ventilschaft 18 gelagert war, durch Lösen der Bolzen 43. 43' abgeschraubt, wodurch der Stellantrieb 4 angehoben werden kann und der Ventilschaft 18 aus dem Kupplungsteil 68 herausgeschraubt werden kann.

Sodann wird der Stellantrieb 4 um 180° gedreht, sodass der Befestigungsflansch 40 oben und der Befestigungsflansch 38 unten in dem Stellantrieb 4 zu liegen kommt. Die erneute Montage beginnt damit, dass der Ventilschaft 18 auf der anderen Seite des Stellantriebs 4 über den Befestigungsflansch 38 an dem Kupplungsteil 66 angebracht wird. Als nächstes wird das Wegemesssystem 48 an dem Befestigungsflansch 40 angebracht und der bewegte Teil 50 des Wegemesssystems wird in das Kupplungsteil 68 eingeschraubt. Danach wird der Befestigungsflansch 38, durch den der Ventilschaft 18 geführt ist, angeschraubt, wonach die Umrüstung abgeschlossen ist.

### Bezugszeichenliste

- 2: Prozessventil
- 4: Stellantrieb
- 6: Joch
- 8: Ventilgehäuse
- 10: Einlass
- 12: Auslass
- 14: Ventilöffnung
- 16: Ventilkörper
- 18: Ventilschaft
- 20: Membran-Arbeitsorgan
- 22: Gehäuse
- 24: Gehäusehälfte
- 26: Gehäusehälfte
- 28: Arbeitskammer
- 30: Raum
- 32: Rückstellfeder
- 34: Membrane
- 36: Membranteller
- 38: Befestigungsflansch
- 40: Befestigungsflansch
- 41, 41': Blindstopfen
- 42: Schweißverbindung
- 43, 43': Bolzen
- 44: Schweißverbindung
- 48: Wegemesssystem
- 50: bewegter Teil
- 52: Feder
- 54: Sensorgehäuse
- 56: Kern
- 58: Hall-Sonde
- 60: Anschlussstutzen
- 62: Anschlussstutzen
- 64: Kupplungseinrichtung
- 66: Kupplungsteil
- 68: Kupplungsteil
- 70: Anschluss
- 72: Anschluss
- 74: Innengewinde
- 76: Loch
- 78: Gewindezapfen
- 80: Dichtring

## Patentansprüche

1. Stellantrieb (4) für Prozessventile (2) mit einem Wegemesssystem (48) umfassend ein Gehäuse (22), umfassend zwei Gehäuseteile (24, 26) und ein zwischen den Gehäuseteilen (24, 26) abgedichtet montiertes, hubbewegliches Membran-Arbeitsorgan (20), welches einerseits mit dem Gehäuse (22) eine mit Druck beaufschlagbare Arbeitskammer (28) bildet und andererseits von mindestens einer Rückstellfeder (32) beaufschlagt ist, sodass im drucklosen Zustand das Membran-Arbeitsorgan (20) mittels der Federvorspannung der Rückstellfeder (32) in eine vorbestimmte Position gebracht wird, wobei das Membran-Arbeitsorgan (20) mit einem mit einem Ventilkörper (16) verbundenen Ventilschaft (18) des Prozessventils (2) zu verbinden ist, wobei eine Kupplungseinrichtung (64) mit beidseitig in Hubrichtung des Membran-Arbeitsorgans (20) liegenden Kupplungsteilen (66, 68) vorgesehen ist, die mit einem Anschluss (70) am Ventilschaft (18) derart abgestimmt sind, dass die Verbindung des Ventilschafts (18) mit dem Membran-Arbeitsorgan (20) durch eine einseitige Montage erfolgt, wobei der Ventilschaft (18) wahlweise an jedem der Kupplungsteile (66, 68) der Kupplungseinrichtung (64) anzuschließen ist, **dadurch gekennzeichnet, dass** an dem Stellantrieb (2) das Wegemesssystem (48) angeordnet ist, das einen Anschluss (72) aufweist, der an jedem der Kupplungsteile (66, 68) der Kupplungseinrichtung (64) durch einseitige Montage anzuschließen ist, wobei die Kupplungsteile (66, 68) zu den korrespondierenden Anschlüssen (70, 72) zum wahlweisen Festlegen des Ventilschaftes (18) oder des Wegemesssystems (48) an der Kupplungseinrichtung (64) analog ausgebildet sind.

2. Stellantrieb nach Anspruch 1, **dadurch gekennzeichnet, dass** an einem Kupplungsteil ein bewegter Teil (50) des Wegemesssystems (48) verbunden ist.

3. Stellantrieb nach Anspruch 1 oder 2, **dadurch gekennzeichnet, dass** die Kupplungseinrichtung (64) konzentrisch zu einander gegenüberliegenden Befestigungsflanschen (38, 40) angeordnet ist, an denen das Gehäuse (22) des Stellantriebs (4) gelagert ist.

4. Stellantrieb nach einem der vorangehenden Ansprüche, **dadurch gekennzeichnet, dass** die gegenüberliegenden Befestigungsflansche (38, 40) so konfiguriert sind, dass entweder das Wegemesssystem (48) oder ein Joch (6) des Prozessventils (2) zu befestigen ist.

5. Stellantrieb nach einem der vorangehenden Ansprüche, **dadurch gekennzeichnet, dass** das erste Kupplungsteil (68) der Kupplungseinrichtung (64) eine erste Buchse umfasst, die auf der einen Seite der Membran (34) liegt und mit einem Innengewinde (74) versehen ist, das auf der der Membran (34) zugewandten Seite eingebracht ist, und dass das zweite Kupplungsteil (66) der Kupplungseinrichtung (64) eine zweite Buchse umfasst, die durch ein Loch (76) in der Membran (34) mit einem Gewindezapfen (78) in das Innengewinde (74) des ersten Kupplungsteils (68) einzuschrauben ist, wobei die beiden Seiten der Membran (34) insbesondere mittels eines Dichtrings (80) gegenüber der Membran (34) fluidisch getrennt sind.

6. Stellantrieb nach einem der vorangehenden Ansprüche, **dadurch gekennzeichnet, dass** das Membran-Arbeitsorgan (20) sowie ein Membranteller (36) des Stellantriebs (4) zwischen den Kupplungsteilen (66, 68) der Kupplungseinrichtung (64) fixiert sind.

7. Stellantrieb nach einem der vorangehenden Ansprüche 1 bis 6, **dadurch gekennzeichnet, dass** ein Sensorgehäuse (54) des Wegemesssystems (48) an dem Befestigungsflansch (38 oder 40) auf der dem Joch (6) abgewandten Außenseite des Gehäuses (22) des Stellantriebs (4) angeordnet ist.

8. Stellantrieb nach Anspruch 1, **dadurch gekennzeichnet, dass** der Ventilschaft (18) an dem Befestigungsflansch (40 oder 38) in der dem Joch (6) zugewandten Innenseite des Gehäuses (22) des Stellantriebs (4) geführt ist.

## Claims

1. Actuator (4) for process valves (2) with a displacement measuring system (48) comprising a housing (22), comprising two housing parts (24, 26) and an actuating diaphragm member (20) sealingly mounted between said housing parts (24, 26) and adapted to move up and down which, on the one hand, together with the housing forms a working chamber (28) that can be pressurized, and, on the other hand, is loaded by at least one return spring (32) such that, in the unpressurized state, said actuating diaphragm member (20) is brought into a predefined position by means of the spring bias of the return spring (32), wherein the actuating diaphragm member (20) is adapted to be connected to a valve shaft (18) connected to the valve body (16) of the process valve (2), wherein a coupling device (64) is provided having coupling parts (66, 68) arranged on both sides in the stroke direction of the actuating diaphragm member (20), which coupling parts are adapted to a connection (70) on the valve shaft (18) in such a way that the connection of the valve shaft (18) to the actuating diaphragm member (20) is obtained by means of a one-sided mounting, wherein the valve shaft (18) is adapted to be selectively connected to either of the coupling parts (66, 68) of the coupling device (64), **characterized in that** the displacement measuring system (48) is arranged on the actuator (2), which displacement measuring system (48) comprises a connection (72) that is adapted to be connected to either of the coupling parts (66, 68) of the coupling device (64) by means of a one-sided mounting, wherein the coupling parts (66, 68) are designed to match the respective connections (70, 72) for selectively securing the valve shaft (18) or the displacement measuring system (48) to the coupling device (64).

2. Actuator according to claim 1, **characterized in that** a moving part (50) of the displacement measuring system (48) is connected to one coupling part.

3. Actuator according to claim 1 or 2, **characterized in that** the coupling device (64) is arranged concentrically to opposing mounting flanges (38, 40) on which the housing (22) of the actuator (4) is mounted.

4. Actuator according to any one of the preceding claims, **characterized in that** the opposing mounting flanges (38, 40) are adapted to have either the displacement measuring system (48) or a yoke (6) of the process valve (2) fastened.

5. Actuator according to any of the preceding claims, **characterized in that** the first coupling part (68) of the coupling device (64) comprises a first bushing that is located on one side of the diaphragm (34) and is provided with an internal thread (74) that is provided on the side facing the diaphragm (34), and **in that** the second coupling part (66) of the coupling device (64) comprises a second bushing that is to be screwed through a hole (76) in the diaphragm (34) with a threaded pin (78) into the internal thread (74) of the first coupling part (68), the two sides of the diaphragm (34) being fluidically separated from the diaphragm (34), in particular by means of a sealing ring (80).

6. Actuator according to any one of the preceding claims, **characterized in that** the actuating diaphragm member (20) and a diaphragm plate (36) of the actuator (4) are secured between the coupling parts (66, 68) of the coupling device (64).

7. Actuator according to one of claims 1 to 6 above, **characterized in that** a sensor housing (54) of the displacement measuring system (48) is arranged on the mounting flange (38 or 40) on the outer side of the housing (22) of the actuator (4), which outer side faces away from the yoke (6).

8. Actuator according to claim 1, **characterized in that** the valve shaft (18) is guided on the mounting flange (40 or 38) on the inner side of the housing (22) of the actuator (4), which inner side faces the yoke (6).

## Revendications

1. Mécanisme de commande (4) pour soupapes de processus (2) avec un système de mesure de distance (48) comprenant un boîtier (22), comprenant deux parties de boîtier (24, 26) et un organe de travail à membrane (20) pouvant effectuer un mouvement de course, monté de manière étanchéifiée entre les parties de boîtier (24, 26), lequel forme d'une part avec le boîtier (22) une chambre de travail (28) pouvant être sollicitée en pression et est sollicité d'autre part par au moins un ressort de rappel (32), de sorte que, dans l'état exempt de pression, l'organe de travail à membrane (20) est amené au moyen de la précontrainte de ressort du ressort de rappel (32) dans une position prédéfinie, dans lequel l'organe de travail à membrane (20) est à relier à une tige de soupape (18), reliée au corps de soupape (16), de la soupape de processus (2), dans lequel un dispositif d'accouplement (64) est pourvu de parties d'accouplement (66, 68) situées des deux côtés dans la direction de course de l'organe de travail à membrane (20), qui, avec un raccord (70), sont adaptées à la tige de soupape (18), de telle sorte que la liaison de la tige de soupape (18) à l'organe de travail à membrane (20) s'effectue par un montage unilatéral, dans lequel la tige de soupape (18) est à raccorder sélectivement à chacune des parties d'accouplement (66, 68) du dispositif d'accouplement (64), **caractérisé en ce que** sur le mécanisme de commande (2) est disposé le système de mesure de distance (48), qui présente un raccord (72), qui est à raccorder à chacune des parties d'accouplement (66, 68) du dispositif d'accouplement (64) par montage unilatéral, dans lequel les parties d'accouplement (66, 68) sont réalisées de manière analogue aux raccords (70, 72) correspondants pour la fixation sélective de la tige de soupape (18) ou du système de mesure de distance (48) sur le dispositif d'accouplement (64).

2. Mécanisme de commande selon la revendication 1, **caractérisé en ce qu'**une partie déplacée (50) du système de mesure de distance (48) est reliée à une partie d'accouplement.

3. Mécanisme de commade selon la revendication 1 ou 2, **caractérisé en ce que** le dispositif d'accouplement (64) est disposé de manière concentrique par rapport à des brides de fixation (38, 40) opposées les unes aux autres, sur lesquelles le boîtier (22) du mécanisme de commande (4) est monté.

4. Mécanisme de commade selon l'une quelconque des reventication précédentes, **caractérisé en ce que** les brides de fixation (38, 40) opposées sont configurées de sorte que soit le système de mesure de distance (48) soit une culasse (6) de la soupape de processus (2) est à fixer.

5. Mécanisme de commande selon l'une quelconque des revendications précédentes, **caractérisé en ce que** la première partie d'accouplement (68) du dispositif d'accouplement (64) comprend une première douille, qui se situe sur l'une des faces de la membrane (34) et est pourvue d'un filetage femelle (74), qui est introduit sur la face tournée vers la membrane (34), et que la deuxième partie d'accouplement (66) du dispositif d'accouplement (64) comprend une deuxième douille, qui est à visser à travers une culasse (76) dans la membrane (34) avec un tourillon fileté (78) dans le filetage femelle (74) de la première partie d'accouplement (68), dans lequel les deux faces de la membrane (34) sont séparées de manière fluidique par rapport à la membrane (34) en particulier au moyen d'une bague d'étanchéité (80).

6. Mécanisme de commande selon l'une quelconque des revendications précédentes, **caractérisé en ce que** l'organe de travail à membrane (20) ainsi qu'un diaphragme (36) du mécanisme de commande (4) sont fixés entre les parties d'accouplement (66, 68) du dispositif d'accouplement (64).

7. Mécanisme de commande selon l'une quelconque des revendications 1 à 6, **caractérisé en ce qu'**un boîtier de capteur (54) du système de mesure de distance (48) est disposé sur la bride de fixation (38 ou 40) sur la face extérieure, opposée à la culasse (6), du boîtier (22) du mécanisme de commande (4).

8. Mécanisme de commande selon la revendication 1, **caractérisé en ce que** la tige de soupape (18) est guidée sur la bride de fixation (40 ou 38) dans la face intérieure, tournée vers la culasse (6), du boîtier (22) du mécanisme de commande (4).
